# EUROPÄISCHE PATENTANMELDUNG

(11) **EP 1 742 415 A1**
(43) Veröffentlichungstag der Anmeldung: **10.01.2007**
(21) Anmeldenummer: 05014577.0
(22) Anmeldetag: 05.07.2005
(51) Int. Cl.: H04L 12/24

(54) **Automatische Korrektur von Alarmlisten in Managementsystemen**

(71) Anmelder: SIEMENS AKTIENGESELLSCHAFT, 80333 München (DE)
(72) Erfinder: Hirsch, Lucian, 81373 München (DE)

(57) **Zusammenfassung**

Die Erfindung betrifft ein Verfahren zum Betreiben eines zumindest einen Manager (NMC) und einen Agenten (OMC) umfassenden Managementsystems, bei dem der Manager (NMC) von dem Agenten (OMC) gesendete Alarme empfängt, welche einen Filter (FILTER) mit einer ersten Filtereinstellung passiert haben. Der Manager (NMC) empfängt weiterhin von dem Agenten (OMC) Informationen zur Anpassung einer von dem Manager (NMC) gespeicherten Liste (NMC alarm list) an eine zweite Filtereinstellung, wobei die Liste (NMC alarm list) von dem Manager (NMC) empfangene Alarme enthält. Erfindungsgemäß betreffen die Informationen ausschließlich Alarme, welche von einem Wechsel von der ersten Filtereinstellung zu der zweiten Filtereinstellung betroffen sind. Weiterhin betrifft die Erfindung einen Manager (NMC) und einen Agenten (OMC) zur Durchführung des Verfahrens.

## Beschreibung

Die Erfindung betrifft Verfahren zum Betreiben eines zumindest einen Manager und einen Agenten umfassenden Managementsystems, bei dem der Manager von dem Agenten gesendete Alarme empfängt, welche einen Filter mit einer ersten Filtereinstellung passiert haben. Weiterhin betrifft die Erfindung einen Manager und eine Agenten zur Durchführung der Verfahren.

Gemäß den Prinzipien eines Managementnetzes, auch als TMN-Prinzipien (TMN: Telecommunications Management Network) bezeichnet, existieren mehrere Managementschichten für das Management eines Kommunikationssystems - wie beispielsweise eines Mobilfunkkommunikationssystems -, wobei jede Schicht mit Ausnahme der obersten und untersten Schicht eine doppelte Funktion, nämlich eine Manager- und eine Agentenfunktion besitzt. Im managenden System ("managing system") übt jede Ebene außer der untersten eine Manager-Funktion für die darunterliegende Ebene aus. Im gemanagten System ("managed system") kommt jeder Ebene außer der obersten eine AgentenFunktion für die nächsthöhere Schicht zu.

Manager starten zur Netzüberwachung und -kontrolle Operationen, indem sie sogenannte "requests" versenden, die von Agenten ausgeführt werden, und erhalten entsprechende Rückmeldungen, sogenannte "responses", von den Agenten. Elemente des Telekommunikationsnetzes, auch als Ressourcen des Telekommunikationsnetzes bezeichnet, die in einer TMN-Hierarchie die Rolle eines Agenten ausüben, erkennen relevante Ereignisse, sogenannte "events", wie z.B. Alarme, generieren entsprechende Mitteilungen, sogenannte "notifications", und übertragen sie in Form von Ereignismeldungen, sogenannten "event reports", an Manager, um ein effizientes Netzmanagement zu ermöglichen.

Das Netzwerkmanagement kann unter anderem das Fehlermanagement (Fault-Management) und/oder das Konfigurationsmanägement (Configuration Management) und/oder das Sicherheitsmanagement (Security-Management) und/oder das des Abrechnungsmanagement (Accounting-Management) und/oder das Leistungsmanagement (Performance-Management) umfassen. Durch das Netzwerkmanagement sollen geeignete Mechanismen zur Informationsverteilung und -verwaltung bereitgestellt werden, so dass bei Bedarf ein umfassendes Bild über den Netzzustand zur Verfügung steht und die einzelnen Objekte des Telekommunikationsnetzes effizient überwacht und konfiguriert werden können.

Die Manager-Agent-Kommunikation erfolgt über sogenannte Management-Schnittstellen bzw. Manager-Agent-Schnittstellen, die in einer objekt-orientierten Umgebung durch ein Kommunikationsprotokoll, wie z.B. CMIP (Common Management Information Protocol) nach ITU-T X.711 oder CORBA (Common Object Request Broker Architecture), und durch ein Objektmodell gekennzeichnet sind. Objektmodelle dienen der Modellierung von Ressourcen des Telekommunikationsnetzes, wobei diese Ressourcen bei der Modellierung in Objektklassen eingeteilt werden.

Solche Schnittstellen gibt es beispielsweise zwischen einerseits der Netzwerkelementmanagement-Ebene (Network Element Management Level) und andererseits der Netzwerkelement-Ebene (Network Element Level). Ein Beispiel für Netzeinrichtungen dieser Manager-Agent-Schnittstelle stellen die Betriebs- und Wartungszentren (OMC: Operation and Maintenance Center) auf der Seite der Netzwerkelementmanagement-Ebene dar, sowie auf der Seite der Netzwerkelement-Ebene Einrichtungen wie z.B. Basisstationen des Basisstationssystems (BSS: Base Station System) eines GSM Mobilfunknetzes, oder Basisstationen anderer Kommunikationsnetze, beispielsweise NodeB's eines UMTS Mobilfunknetzes (UMTS: Universal Mobile Telecommunication System), oder Funkzugangspunkte eines WLAN-Systems (WLAN: Wireless Local Area Network) beispielsweise gemäß einem der IEEE 802.11-Standards.

Management-Schnittstellen bzw. Manager-Agent-Schnittstellen existieren auch zwischen einerseits der Netzwerkmanagement-Ebene (Network Management Level) und andererseits der Netzwerkelementmanagement-Ebene. Ein Beispiel für Netzeinrichtungen zu dieser Manager-Agent-Schnittstelle stellen die Netzwerkmanagementzentren (NMC: Network Management Center) auf der Seite der Netzwerkmanagement-Ebene und die Betriebs- und Wartungszentren (OMC: Operation and Maintenance Center) auf der Seite der Netzwerkelementmanagement-Ebene z.B. im genannten GSM oder einem anderen Mobilfunk- oder Telekommunikationsnetz dar.

Der Erfindung liegt die Aufgabe zugrunde, effiziente Verfahren zum Betreiben eines Managementsystems und Vorrichtungen zur Durchführung der Verfahren aufzuzeigen.

Diese Aufgabe wird durch ein Verfahren mit den Merkmalen des Anspruchs 1, sowie durch ein Verfahren und Vorrichtungen mit Merkmalen von nebengeordneten Ansprüchen gelöst. Vorteilhafte Ausgestaltungen und Weiterbildungen sind Gegenstand von Unteransprüchen.

Bei dem erfindungsgemäßen Verfahren zum Betreiben eines Managementsystems empfängt der Manager von dem Agenten gesendete Alarme, welche einen Filter mit einer ersten Filtereinstellung passiert haben. Weiterhin empfängt der Manager von dem Agenten Informationen zur Anpassung einer von dem Manager gespeicherten Liste an eine zweite Filtereinstellung. Hierbei enthält die Liste von dem Manager empfangene Alarme. Erfindungsgemäß betreffen die Informationen ausschließlich Alarme, welche von einem Wechsel von der ersten Filtereinstellung zu der zweiten Filtereinstellung betroffen sind.

Es wird ein Filter eingesetzt, welchen von dem Agenten gesendete Alarme passieren müssen, um vom Manager bearbeitet werden zu können. Der Filter ist hierbei vorzugsweise Bestandteil des Agenten, er kann alternativ auch zwischen dem Agenten und dem Manager oder im Eingangsbereich des Managers angeordnet sein. Die Filtereinstellung bzw. die von dem Filter angewandten Filterkriterien bestimmen, ob ein Alarm von dem Manager empfangen wird oder nicht. Vorzugsweise handelt es sich bei der Filtereinstellung um eine managerspezifische Einstellung, welche z.B. von dem Manager gesteuert werden kann.

Der Manager empfängt Alarme von dem Agenten. Manche oder alle der empfangenen Alarme werden von dem Manager in einer Liste gespeichert. Vorzugsweise wird jeder empfangene Alarm zeitweilig von dem Manager in der Liste gespeichert. Die Liste kann für jeden Alarm mehrere Informationen enthalten, welche den Alarm beschreiben, wie z.B. eine Identifikationsnummer, die Angabe einer gemanagten Ressource, welche den Alarm generiert hat, den Zeitpunkt des Alarms, den Bearbeitungszustand des Alarms, usw.

Es werden Informationen von dem Agenten an den Manager gesendet, welche die Anpassung der Liste an eine zweite Filtereinstellung betreffen. Die Informationen können, gegebenenfalls pro betroffenem Alarm, in einer oder in mehreren Nachrichten übertragen werden. Inhaltlich können die Informationen Alarme, welche in der Liste des Managers enthalten sind, und/oder Alarme, welche nicht in der Liste des Managers enthalten sind, betreffen. Jedoch beziehen sich die Informationen ausschließlich auf Alarme, welche von dem Filtereinstellungswechsel betroffen sind, d.h. insbesondere Alarme, in Bezug auf welche sich die Entscheidung, ob der jeweilige Alarm den Filter passiert oder nicht, durch den Wechsel der Filtereinstellung ändert. Dass die Informationen ausschließlich derart betroffene Alarme betreffen bedeutet, dass die Informationen nicht Alarme betreffen, welche sowohl die erste als auch die zweite Filtereinstellung passieren würden oder welche sowohl die erste als auch die zweite Filtereinstellung nicht passieren würden.

Die Informationen ermöglichen es dem Manager, die Liste an die zweite Filtereinstellung anzupassen, so dass nach erfolgter Anpassung unter Verwendung der Informationen in der Liste ausschließlich Alarme enthalten sind, welche die zweite Filtereinstellung passieren würden und keine Alarme, welche die zweite Filtereinstellung nicht passieren würden. Vorteilhafterweise ist es zur Herstellung dieses Zustands der Liste nicht nötig, weitere Informationen von dem Agenten hinzuzuziehen.

In Weiterbildung der Erfindung sendet der Manager eine Aufforderung an den Agenten, wobei die Aufforderung die Art der Änderung der Filtereinstellung vorgibt, und wobei die Aufforderung den Agenten zur Versendung der Informationen auffordert. Auf diese Weise kann der Manager bestimmen, welche Alarme er von dem Agenten empfängt bzw. zu empfangen wünscht. Weiterhin kann der Manager entscheiden, dass er die Informationen zur Anpassung seiner Liste zu erhalten wünscht. Vorzugsweise handelt es sich bei der Aufforderung zur Versendung der Informationen um einen optionalen Nachrichteninhalt, so dass der Manager bei Erstellung der Aufforderung zum Wechsel der Filtereinstellung entscheiden kann, ob er die Informationen von dem Agenten empfangen möchte oder nicht, und dementsprechend den optionalen Nachrichteninhalt in die Aufforderung einfügt oder nicht.

Gemäß einem zweiten erfindungsgemäßen Verfahren zum Betreiben eines Managementsystems sendet der Agent Alarme, welche einen Filter mit einer ersten Filtereinstellung passiert haben, an den Manager. Weiterhin sendet der Agent dem Manager Informationen zur Anpassung einer von dem Manager gespeicherten Liste an eine zweite Filtereinstellung, wobei die Liste von dem Manager empfangene Alarme enthält. Erfindungsgemäß betreffen die Informationen ausschließlich Alarme, welche von einem Wechsel von der ersten Filtereinstellung zu der zweiten Filtereinstellung betroffen sind. Obige Ausführungen bezüglich des zuerst beschriebenen erfindungsgemäßen Verfahrens sind entsprechend auf das zweite erfindungsgemäße Verfahren anwendbar.

In Weiterbildung der Erfindung empfängt der Agent eine Aufforderung zum Wechsel der Filtereinstellung von dem Manager, wobei die Aufforderung die Art der Änderung der Filtereinstellung vorgibt, und wobei die Aufforderung den Agenten zur Versendung der Informationen auffordert, und im Anschluss nimmt der Agent einen Wechsel von der ersten zu der zweiten Filtereinstellung vor. In diesem Fall obliegt dem Manager die Entscheidung über die zu verwendende Filtereinstellung und darüber, ob er die Informationen zur Anpassung der Liste zu empfangen wünscht, und der Agent führt die entsprechende Anweisung des Managers durch.

Mit Vorteil ermittelt der Agent die Informationen aus einem Vergleich der ersten mit der zweiten Filtereinstellung und unter Verwendung einer von dem Agenten gespeicherten Liste von Alarmen, welche die Alarme der von dem Manager gespeicherten Liste umfassen. Sowohl der Manager als auch der Agent speichern Alarme, wobei zumindest alle von dem Manager gespeicherten Alarme auch in der Liste des Agenten enthalten sind. Durch einen Vergleich der beiden Filtereinstellungen kann der Agent feststellen, welche Alarme von der Änderung der Filtereinstellung betroffen sind.

Einer vorteilhaften Ausgestaltung der Erfindung gemäß betreffen die Informationen mindestens einen nicht in der Liste des Managers enthaltenen Alarm, welcher die zweite Filtereinstellung passieren würde. Vorzugsweise betreffen die Informationen alle nicht in der Liste des Managers enthaltenen Alarme, welche die zweite Filtereinstellung passieren würden. Dies entspricht denjenigen Alarmen, welche zwar nicht die erste Filtereinstellung, jedoch die zweite Filtereinstellung passieren würden. Dass ein Alarm die zweite Filtereinstellung passieren würde bedeutet, dass dieser Alarm bei Verwendung der zweiten Filtereinstellung zum Manager gelangen würde. Vorteilhaft ist es, wenn die Informationen den Manager anweisen, den mindestens einen Alarm in die Liste aufzunehmen.

Einer vorteilhaften Ausgestaltung der Erfindung gemäß betreffen die Informationen mindestens einen in der Liste des Managers enthaltenen Alarm, welcher die zweite Filtereinstellung nicht passieren würde. Vorzugsweise betreffen die Informationen alle in der Liste des Managers enthaltenen Alarme, welche die zweite Filtereinstellung nicht passieren würden. Dies entspricht denjenigen Alarmen, welche zwar die erste Filtereinstellung, nicht jedoch die zweite Filtereinstellung passieren würden. Dass ein Alarm die zweite Filtereinstellung nicht passieren würde bedeutet, dass dieser Alarm bei Verwendung der zweiten Filtereinstellung nicht zum Manager gelangen könnte. Vorteilhaft ist es, wenn die Informationen den Manager anweisen, den mindestens einen Alarm aus der Liste zu entfernen. Es ist möglich, dass der Manager angewiesen wird, vor der Entfernung des mindestens einen Alarms einen gespeicherten Zustand des mindestens einen Alarms zu ändern. Dies erweist sich als sinnvoll, wenn eine Löschung eines Alarms nur für Alarme, welche in einem bestimmten Zustand sind, möglich ist.

Der erfindungsgemäße Manager für ein Managementsystem weist auf: Mittel zum Empfangen von von dem Agenten gesendeten Alarmen, welche einen Filter mit einer ersten Filtereinstellung passiert haben, sowie Mittel zum Speichern einer Liste, welche von dem Manager empfangene Alarme enthält, und Mittel zum Empfangen und Auswerten von Informationen von dem Agenten zur Anpassung der von dem Manager gespeicherten Liste an eine zweite Filtereinstellung, wobei die Informationen ausschließlich Alarme betreffen, welche von einem Wechsel von der ersten Filtereinstellung zu der zweiten Filtereinstellung betroffen sind. Vorzugsweise umfasst der erfindungsgemäße Manager weiterhin Mittel zum Versenden einer Aufforderung zum Wechsel der Filtereinstellung an den Agenten, wobei die Aufforderung die Art der Änderung der Filtereinstellung vorgibt, und wobei die Aufforderung den Agenten zur Versendung der Informationen auffordert.

Der erfindungsgemäße Agent für ein Managementsystem weist auf: Mittel zum Senden von Alarmen an den Manager, welche einen Filter mit einer ersten Filtereinstellung passiert haben, sowie Mittel zum Ermitteln und Versenden von Informationen zur Anpassung der von dem Manager gespeicherten Liste an eine zweite Filtereinstellung, wobei die Informationen ausschließlich Alarme betreffen, welche von einem Wechsel von der ersten Filtereinstellung zu der zweiten Filtereinstellung betroffen sind.

Der erfindungsgemäße Manager und der erfindungsgemäße Agent eignen sich insbesondere zur Durchführung des jeweiligen erfindungsgemäßen Verfahrens, wobei dies auch auf die Ausgestaltungen und Weiterbildungen zutreffen kann. Hierzu können sie weitere geeignete Mittel umfassen.

Im folgenden wird die Erfindung anhand eines Ausführungsbeispiels näher erläutert. Dabei zeigen:
- Figur 1:: einen Ausschnitt aus einem Managementnetz,
- Figur 2:: einen ersten Inhalt von Alarmlisten eines Managers und eines Agenten entsprechend einer ersten Filtereinstellung,
- Figur 3:: einen zweiten Inhalt von Alarmlisten eines Managers und eines Agenten entsprechend einer zweiten Filtereinstellung,
- Figur 4:: schematisch einen erfindungsgemäßen Verfahrensablauf.

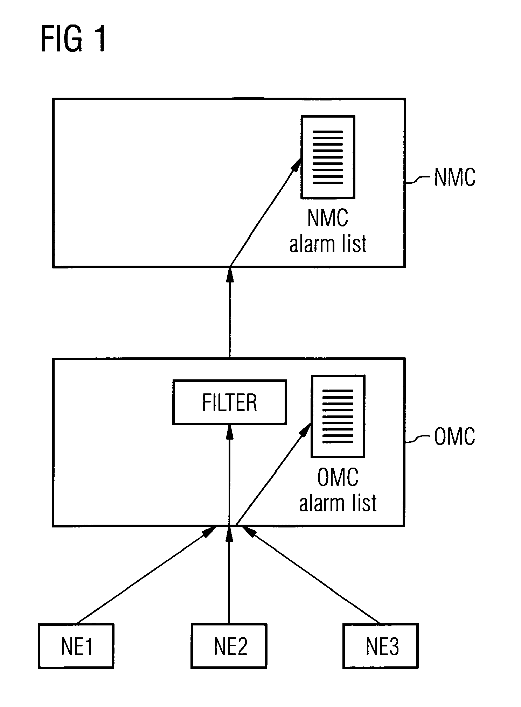

Figur 1 zeigt einen Ausschnitt aus einem Managementnetz eines Mobilfunkkommunikationssystems nach dem Standard UMTS. Auf der untersten der drei dargestellten hierarchischen Schichten befinden sich die Netzelemente NE1, NE2 und NE3. Diese wirken als Agenten gegenüber dem Betriebs- und Wartungszentrum OMC, welches als Agent gegenüber dem auf der obersten dargestellten Hierarchieebene platzierten Netzwerkmanagementzentrum NMC fungiert. Das Managementnetz kann weitere in Figur 1 nicht dargestellte Komponenten enthalten.

Ein effizientes Management des Telekommunikationssystems setzt voraus, dass relevante Ereignismeldungen, wie z.B. Alarme, von untergeordneten Agenten rasch an übergeordnete Manager gesendet werden. Hierfür kann ein Manager bei Agenten die für ihn relevanten Ereignismeldungen "abonnieren". Für diesen Zweck definiert der 3GPP Standard TS 32.302 ("Notification Integration Reference Point (IRP): Information Service"), insbesondere in Kapitel 6.3.1, einen so genannten Subscribe-Mechanismus. Unabhängig von dem für die jeweilige Manager-Agent-Schnittstelle verwendeten Kommunikationsprotokoll sendet der Manager eine Anforderung an den Agenten, welche Angaben über die Arten und Parameterwerte der für ihn relevanten Ereignismeldungen enthält. Diese Anforderung hat die Erzeugung eines geeigneten Filters im Agenten zur Folge.

Ein derartiger Filter FILTER ist in Figur 1 Bestandteil des Betriebs- und Wartungszentrums OMC. Die Aufgabe eines Filters ist es, nur diejenigen Notifications zum Manager weiterzuleiten, welche bestimmten Kriterien genügen, so dass ein Manager den Informationsfluss vom Agenten zum Manager nach seinen Anforderungen beeinflussen und steuern kann. Ein solcher Filter kann beispielsweise bei einer CORBA-basierten Schnittstelle mit Hilfe des so genannten "Notification Service" gemäß OMG "Notification Service Specification V1.1", insbesondere Kapitel 2.1.2, oder bei einer CMIP-basierten Schnittstelle mit Hilfe von Event Forwarding Discriminators gemäß ITU-T X.734 "Systems Management: Event Report Management Function", insbesondere Kapitel 8.1.2, realisiert werden.

Um die Übertragung von Ereignismeldungen über die Management-Schnittstelle zu beginnen, sendet ein Manager gemäß 3GPP TS 32.302, insbesondere Kapitel 6.3.1, eine Subscribe-Anforderung an den Agenten, welche eine als "managerReference" bezeichnete Identifikationsinformation des Managers enthält. Der Agent antwortet auf die Subscribe-Anforderung mit einer Nachricht, welche die als "subscriptionId" bezeichnete Identifikationsinformation der Subskription enthält. Diese Identifikationsinformation der Subskription kann für die weitere Behandlung der Subskription verwendet werden.

Gemäß Figur 1 empfängt das Betriebs- und Wartungszentrum OMC Alarme von den Netzelementen NE1, NE2 und NE3. Die von dem Betriebs- und Wartungszentrum OMC empfangenen Alarme werden in der Alarmliste OMC alarm list des Betriebs- und Wartungszentrums OMC gespeichert. Weiterhin werden sie in dem Betriebs- und Wartungszentrum OMC an den Filter FILTER weitergegeben, welcher testet, ob die Alarme an das Netzwerkmanagementzentrum NMC weiterzuleiten sind. Diejenigen Alarme, welche den Filter FILTER der jeweiligen Subskription des Netzwerkmanagementzentrums NMC passieren, werden von dem Betriebs- und Wartungszentrum OMC an das Netzwerkmanagementzentrum NMC gesendet. Das Netzwerkmanagementzentrum NMC speichert die Alarme in seiner Alarmliste NMC alarm list. Sowohl das Betriebs- und Wartungszentrum OMC als auch das Netzwerkmanagementzentrum NMC können Maßnahmen zur Behandlung von Alarmen veranlassen und sich gegenseitig über diese Behandlung informieren.

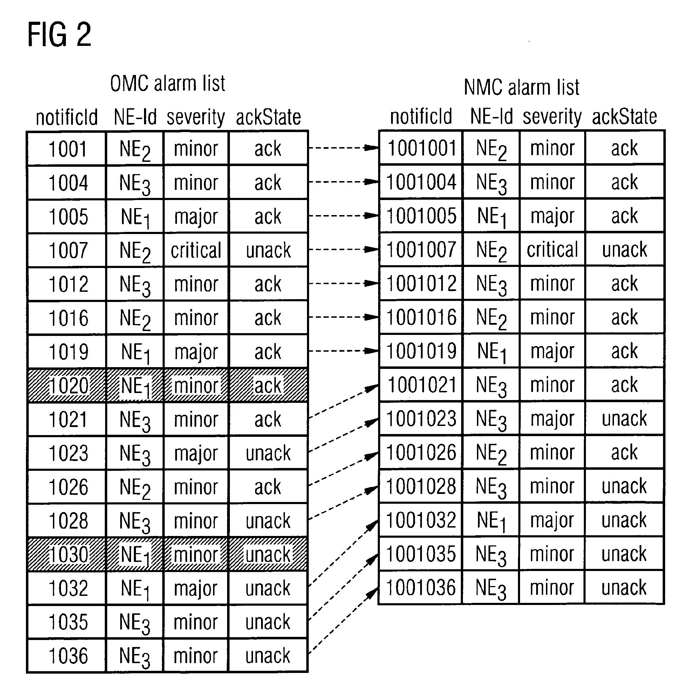

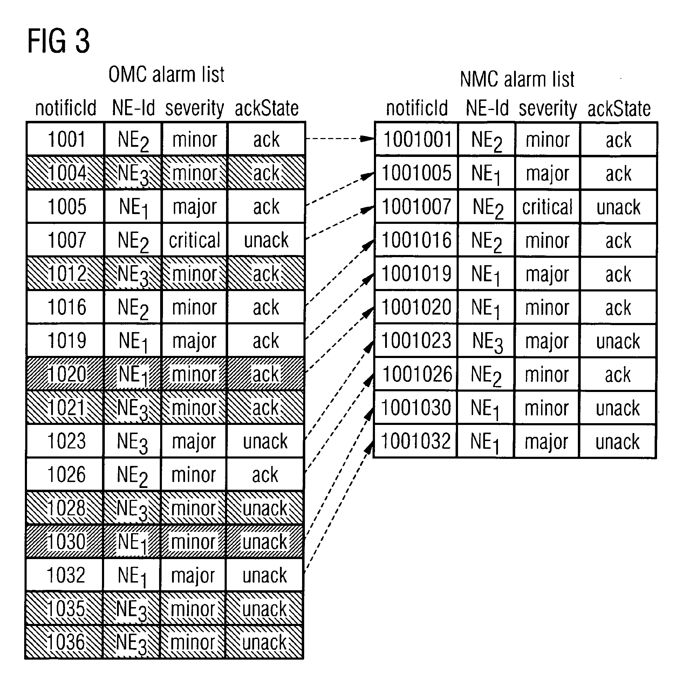

Figur 2 zeigt die Einträge der Alarmlisten OMC alarm list und NMC alarm list zu einem bestimmten Zeitpunkt. Jede Zeile der Alarmlisten OMC alarm list und NMC alarm list entspricht einem bestimmten Alarm, wobei die erste Spalte notificid eine Identifikationsnummer des jeweiligen Alarms enthält. Die von den Netzelementen NE1, NE2 und NE3 generierten Alarme erhalten im Netzwerkmanagementzentrum NMC neue Werte der Identifikationsnummer, so dass diese netzweit eindeutig sind. In den Figuren 2 und 3 wird von dem Netzwerkmanagementzentrum NMC die Zahl 1000000 zum von dem Betriebs- und Wartungszentrum OMC verwendeten Wert der Identifikationsnummer addiert. Die zweite Spalte NE-Id gibt das Netzelement NE1, NE2 oder NE3 an, von welchem der jeweilige Alarm stammt. Die dritte Spalte severity gibt den von demjenigen Netzelement, welches den Alarm generiert hat, vergebenen Wert des die Wichtigkeit des jeweiligen Alarms angebenden Parameters perceivedSeverity an, welcher die Werte "critical", d.h. kritisch, "major", d.h. bedeutend, oder "minor", d.h. unbedeutend, annehmen kann. Die vierte Spalte ackState zeigt an, ob der jeweilige Alarm bestätigt wurde, entsprechend dem Wert "ack", oder nicht bestätigt wurde, entsprechend dem Wert "unack". Die Bestätigung eines Alarms kann sowohl durch das Betriebs- und Wartungszentrum OMC als auch durch das Netzwerkmanagementzentrum NMC erfolgen, wobei die jeweils andere Managementeinrichtung über die Bestätigung informiert wird, so dass der Wert der Spalte ackState in den Alarmlisten OMC alarm list und NMC alarm list für den jeweiligen Alarm stets der gleiche ist.

Nachdem die Ursache eines Alarms behoben und ein Alarm Weise abschließend behandelt wurde, wird dieser gelöscht. Über die Löschung eines Alarms informieren sich das Betriebs- und Wartungszentrum OMC und das Netzwerkmanagementzentrum NMC gegenseitig, so dass ein zu löschender Alarm aus beiden Alarmlisten OMC alarm list und NMC alarm list entfernt wird. Unter der Bedingung, dass die Kommunikation zwischen dem Netzwerkmanagementzentrum NMC und dem Betriebs- und Wartungszentrum OMC ordnungsgemäß funktioniert, ist es somit nicht möglich, dass die Alarmliste NMC alarm list einen Alarm enthält, welcher nicht in der Alarmliste OMC alarm list enthalten ist.

Die Alarmliste OMC alarm list des Betriebs- und Wartungszentrums OMC enthält alle von den Netzelementen NE1, NE2 und NE3 gesendeten und noch nicht gelöschten Alarme. Hingegen enthält die Alarmliste NMC alarm list des Netzwerkmanagementzentrums NMC entsprechend der Einstellung des Filters FILTER lediglich einen Teil dieser Alarme. Es wird als konkretes Beispiel davon ausgegangen, dass gemäß der Subskription des Netzwerkmanagementzentrums NMC der Filter FILTER des Betriebs- und Wartungszentrums OMC die folgende Struktur aufweist: bezüglich der vom Netzelement NE1 generierten Alarme werden ausschließlich Alarme, deren Parameter perceivedSeverity gleich den Werten "critical" oder "major" ist, an das Netzwerkmanagementzentrum NMC weitergeleitet; bezüglich der von den Netzelementen NE2 und NE3 generierten Alarme werden alle Alarme unabhängig von dem Wert des Parameters perceivedSeverity, d.h. Alarme mit den Werten "critical", "major" oder "minor", an das Netzwerkmanagementzentrum NMC weitergeleitet. Wie aus Figur 2 ersichtlich, wurden die von dem Netzelement NE1 generierten Alarme mit den Identifikationsnummern 1020 und 1030 nicht von dem Betriebs- und Wartungszentrum OMC an das Netzwerkmanagementzentrum NMC weitergeleitet, da der Wert des Parameters perceivedSeverity dieser Alarme "minor" ist.

Zu einem späteren Zeitpunkt kann ein Manager unter Verwendung der im Standard TS 32.302, insbesondere Kapitel 6.6.1, definierten Operation changeSubscriptionFilter die Filtereinstellung des Agenten in Bezug auf seine jeweilige Subskription ändern. Diese Operation ist z.B. dann sinnvoll, wenn neue Fehlersituationen in einer Netzregion auftreten und bestimmte Alarme daher näher untersucht werden müssen. Im folgenden wird davon ausgegangen, dass der NMC-Operator wegen neuer Probleme in der Netzregion der Netzelementes NE1 und weil die von dem Netzelement NE3 generierten Alarme mit dem Wert "minor" des Parameters perceivedSeverity, beispielsweise wegen Instandsetzungsarbeiten vor Ort, ohne Bedeutung geworden sind, entscheidet, die Filterstruktur des Filters FILTER des Betriebs- und Wartungszentrums OMC folgendermaßen zu ändern: alle von dem Netzelement NE1 generierten Alarme, d.h. auch die Alarme mit dem Wert "minor" des Parameters perceivedSeverity, sollen von dem Betriebs- und Wartungszentrum OMC an das Netzwerkmanagementzentrum NMC weitergeleitet werden; betreffend die von dem Netzelement NE3 generierten Alarme sollen ausschließlich Alarme mit den Werten "critical" oder "major" des Parameters perceivedSeverity von dem Betriebs- und Wartungszentrum OMC an das Netzwerkmanagementzentrum NMC weitergeleitet werden; die Filtereinstellung betreffend die von dem Netzelement NE2 generierten Alarme sollen unverändert beibehalten werden.

Die in Figur 2 dargestellte Alarmliste NMC alarm list des Netzwerkmanagementzentrums NMC ist angesichts der neuen Filtereinstellung nicht mehr korrekt: die in der Alarmliste OMC alarm list des Betriebs- und Wartungszentrums OMC enthaltenen Alarme mit den Identifikationsnummern 1020 und 1030 fehlen in der Alarmliste NMC alarm list des Netzwerkmanagementzentrums NMC, obwohl diese für das Netzwerkmanagementzentrum NMC gemäß der neuen Filtereinstellung nunmehr relevant sind; die Alarme mit den Identifikationsnummern 1004, 1012, 1021, 1028, 1035 und 1036 sind in der Alarmliste NMC alarm list des Netzwerkmanagementzentrums NMC enthalten, obwohl sie gemäß der neuen Filtereinstellung nunmehr nicht mehr relevant sind.

Die Alarmliste NMC alarm list muss überarbeitet werden, so dass sie alle Alarme der Alarmliste OMC alarm list des Betriebs- und Wartungszentrums OMC enthält, welche den Filter FILTER mit den neuen Einstellungen passieren würden, und keine Alarme, welche den Filter FILTER mit den neuen Einstellungen nicht passieren würden. Dies könnte durch eine vollständige Alignment-Prozedur realisiert werden: das Netzwerkmanagementzentrum NMC löscht alle Inhalte der Alarmliste NMC alarm list, das Betriebs- und Wartungszentrum OMC überprüft alle in der Alarmliste OMC alarm list des Betriebs- und Wartungszentrums OMC enthaltenen Alarme unter Verwendung der neuen Filterkriterien und sendet die relevanten Alarme, d.h. die Alarme, welche den Filter FILTER mit der neuen Filtereinstellung passieren, an das Netzwerkmanagementzentrum NMC. Dieses Vorgehen belastet einerseits das Betriebs- und Wartungszentrum OMC stark, da die vollständige Alarmliste OMC alarm list durch den Filter FILTER überprüft werden muss, und andererseits die Schnittstelle zwischen dem Betriebs- und Wartungszentrum OMC und dem Netzwerkmanagementzentrum NMC, da eine Vielzahl von Alarmen zu übertragen sind. Möglich wäre es auch, die beschriebene aufwendige Synchronisation lediglich in Bezug auf die Alarme des Netzelementes NE1 durchzuführen. In diesem Fall müsste der NMC-Operator jedoch zusätzlich die Alarmliste NMC alarm list des Netzwerkmanagementzentrums NMC durchsuchen, und alle Alarme des Netzelementes NE3 mit dem Wert "minor" des Parameters perveivedServerity manuell entfernen. Letzteres belastet zwar nicht die Schnittstelle zwischen dem Betriebs- und Wartungszentrum OMC und dem Netzwerkmanagementzentrum NMC, ist jedoch für den NMC-Operator mit einem hohen Aufwand verbunden.

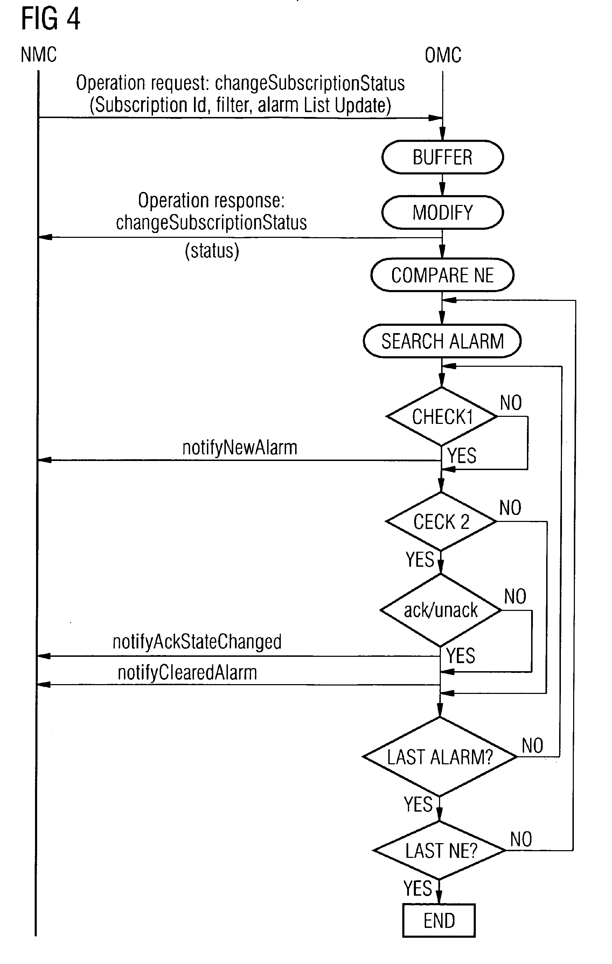

Figur 3 zeigt die Einträge der Alarmliste NMC alarm list des Netzwerkmanagementzentrums NMC, welche der neuen Filtereinstellung entsprechen. Das im folgenden beschriebene Verfahren ermöglicht es, dass dem Netzwerkmanagementzentrum NMC nach Änderung seiner Subskription auf effiziente Weise die veränderte Alarmliste NMC alarm list vorliegt. Ein Ablaufdiagramm zum erfindungsgemäßen Verfahren ist in Figur 4 dargestellt.

Das Netzwerkmanagementzentrum NMC sendet die Nachricht Operationrequest:changeSubscriptionStatus an das Betriebs- und Wartungszentrum OMC. Mit dieser Nachricht wird das Betriebs- und Wartungszentrum OMC aufgefordert, die Filtereinstellung der Subskription des Netzwerkmanagementzentrums NMC wie oben beschrieben zu ändern. Die Nachricht Operationrequest:changeSubscriptionStatus enthält Identifikationsinformationen subscriptionId der Subskription, Angaben filter über die neuen Filtereinstellungen, und zusätzlich einen Parameter alarmListUpdate. Der Parameter alarmListUpdate wurde von dem Netzwerkmanagementzentrum NMC eingefügt, um anzuzeigen, dass das erfindungsgemäße Verfahren durchzuführen ist. Er ist optional, d.h. wenn ein Manager entscheidet, für eine bestimmte Subskriptions-Änderung auf das erfindungsgemäße Verfahren zu verzichten, ist der Parameter alarmListUpdate nicht in der Aufforderungsnachricht Operationrequest:changeSubscriptionStatus enthalten.

Im Verfahrensschritt BUFFER speichert das Betriebs- und Wartungszentrum OMC die bisherigen Filtereinstellungen der Subskription und verändert im Verfahrensschritt MODIFY die von ihm für die Subskription aktuell verwendeten Filtereinstellungen gemäß den Angaben der Aufforderungsnachricht Operationrequest:changeSubscriptionStatus. Nach erfolgreicher Veränderung der Filtereinstellungen sendet das Betriebs- und Wartungszentrum OMC dem Netzwerkmanagementzentrum NMC eine Antwortnachricht Operationresponse:changeSubscriptionStatus, welche den Status status der vom Netzwerkmanagementzentrum NMC angeforderten Operation der Subskriptionsänderung enthält, d.h. die Angabe, dass die Subskription erfolgreich geändert wurde.

Im Verfahrensschritt COMPARE NE erstellt das Betriebs- und Wartungszentrum OMC durch Vergleich der gespeicherten alten Filtereinstellungen mit den aktuellen Filtereinstellungen eine Liste derjenigen Netzelemente, welche von der Veränderung der Subskription betroffen sind. Die folgenden Schritte werden in Bezug auf das erste Netzelement dieser Liste durchgeführt. Im Verfahrensschritt SEARCH ALARM ermittelt das Betriebs- und Wartungszentrum OMC eine Liste von Alarmen aus den in der Alarmliste des Betriebs- und Wartungszentrums OMC gespeicherten Alarmen des jeweiligen Netzelementes, welche von der Veränderung der Subskription betroffen sind. Ein Alarm ist dann von der Veränderung der Subskription betroffen, wenn entweder der Alarm gemäß der alten Filtereinstellungen zu dem Netzwerkmanagementzentrum NMC weitergeleitet wurde, gemäß der neuen Filtereinstellungen jedoch nicht weitergeleitet würde, oder wenn der Alarm gemäß der neuen Filtereinstellungen zu dem Netzwerkmanagementzentrum NMC weitergeleitet würde, gemäß der alten Filtereinstellungen jedoch nicht weitergeleitet wurde. Die folgenden Schritte werden in Bezug auf den ersten Alarm der in dem Verfahrensschritt SEARCH ALARM ermittelten Liste durchgeführt.

In dem Entscheidungsschritt CHECK 1 überprüft das Betriebs- und Wartungszentrum OMC in Bezug auf den betrachteten Alarm des betrachteten Netzelementes, ob es zutrifft, dass der Alarm durch die alten Filtereinstellungen nicht zum Netzwerkmanagementzentrum NMC hindurchgelassen wurde und gemäß den neuen Filtereinstellungen zu dem Netzwerkmanagementzentrum NMC weiterzuleiten wäre. Trifft dies zu, entsprechend dem ausgehenden Zweig YES, sendet das Betriebs- und Wartungszentrum OMC eine Nachricht notifyNewAlarm, definiert durch den Standard 3GPP TS 32.111-2, insbesondere Kapitel 6.8.1, an das Netzwerkmanagementzentrum NMC. Die Nachricht notifyNewAlarm enthält alle Parameter dieses Alarms. Anhand des Parameters EventTime, welcher den Zeitpunkt des Alarms angibt, kann das Netzwerkmanagementzentrum NMC erkennen, dass dieser Alarm in der Vergangenheit aufgetreten ist und durch die neue Filtereinstellung relevant geworden ist. Das Netzwerkmanagementzentrum NMC fügt den Alarm in die eigene Alarmliste ein. Im konkreten Beispiel der Figuren 2 und 3 betrifft diese Vorgehensweise die Alarme 1020 und 1030.

Im Anschluss oder wenn das Ergebnis der Überprüfung des Entscheidungsschrittes CHECK 1 negativ ist, entsprechend dem Zweig NO, überprüft das Betriebs- und Wartungszentrum OMC in dem Entscheidungsschritt CHECK 2, ob es zutrifft, dass der betrachtete Alarm aufgrund der alten Filtereinstellungen an das Netzwerkmanagementzentrum NMC weitergeleitet wurde und durch die neuen Filtereinstellungen gestoppt, d.h. nicht zu dem Netzwerkmanagementzentrum NMC weitergeleitet würde. Trifft dies zu, entsprechend dem ausgehenden Zweig YES, findet ein weiterer Entscheidungsschritt ack/unack? statt. Bei dem Entscheidungsschritt ack/unack? überprüft das Betriebs- und Wartungszentrum OMC, ob der betrachtete Alarm den Zustand unack aufweist, d.h. noch nicht bestätigt wurde. Trifft dies zu, entsprechend dem ausgehenden Zweig YES, sendet das Betriebs- und Wartungszentrum OMC eine gemäß 3GPP TS 32.111-2, insbesondere Kapitel 6.8.2, definierte Nachricht notifyAckStateChanged an das Netzwerkmanagementzentrum NMC. Die Nachricht notifyAckStateChanged informiert das Netzwerkmanagementzentrum NMC unter Verwendung des Parameters ackState, welcher von dem Betriebs- und Wartungszentrum OMC auf den Wert "acknowledged" gesetzt wird, darüber, dass der betrachtete Alarm bestätigt werden soll. Im konkreten Beispiel der Figuren 2 und 3 betrifft dies die Alarme mit den Identifikationsnummern 1028, 1035 und 1036. Nach Empfang der Nachricht notifyAckStateChanged von dem Betriebs- und Wartungszentrum OMC ändert das Netzwerkmanagementzentrum NMC den Zustand des betrachteten Alarms von "unacknowledged" auf "acknowledged". Die Änderung des Zustandes des betrachtetent Alarms ist nötig, da Alarme erst aus einer Alarmliste gelöscht werden dürfen, wenn sie zuvor bestätigt wurden.

Im Anschluss an die Versendung der Nachricht notifyAckStateChanged oder wenn die Überprüfung des Entscheidungsschrittes ack/unack? gemäß dem Zweig NO negativ ausgefallen ist, sendet das Betriebs- und Wartungszentrum OMC eine gemäß 3GPP TS 32.111-2, insbesondere Kapitel 6.8.3, definierte Nachricht notifyClearedAlarm an das Netzwerkmanagementzentrum NMC. Durch die Nachricht notifyClearedAlarm wird das Netzwerkmanagementzentrum NMC angewiesen, den betrachteten Alarm aus seiner Alarmliste zu löschen. Dies betrifft im konkreten Beispiel der Figuren 2 und 3 die Alarme mit den Identifikationsnummern 1004, 1012, 1021, 1028, 1035 und 1036.

Im folgenden Entscheidungsschritt LAST ALARM?, bzw. im Fall, dass die Überprüfung des Entscheidungsschrittes CHECK 2 gemäß dem Zweig NO negativ ausgefallen ist, überprüft das Betriebs- und Wartungszentrum OMC, ob es sich bei dem betrachteten Alarm um den letzten Alarm der in dem Verfahrensschritt SEARCH ALARM erstellten Liste des betrachteten Netzelementes handelt. Trifft dies nicht zu, entsprechend dem ausgehenden Zweig NO, wird der nächste Alarm der Liste betrachtet und die Schritte beginnend mit dem Entscheidungsschritt CHECK 1 werden in Bezug auf diesen nächsten Alarm durchgeführt. Nachdem die Schritte in Bezug auf den letzten Alarm der Liste der Alarme des betrachteten Netzelementes durchgeführt wurden, entsprechend dem aus dem Entscheidungsschritt LAST ALARM? ausgehenden Zweig YES, wird in dem Entscheidungsschritt LAST NE? überprüft, ob es sich bei dem betrachteten Netzelement um das letzte Netzelement der in dem Verfahrensschritt COMPARE NE erstellten Liste handelt. Trifft dies nicht zu, entsprechend dem ausgehenden Zweig NO, wird das nächste Netzelement der Liste betrachtet und die Schritte beginnend mit dem Verfahrensschritt SEARCH ALARM werden in Bezug auf dieses nächste Netzelement durchgeführt. In dem Verfahrensschritt END wird das Verfahren zur Aktualisierung der Alarmliste des Netzwerkmanagementzentrums NMC beendet, wenn die Schritte für jedes Netzelement der in dem Verfahrensschritt COMPARE NE erstellten Liste durchgeführt wurden, gemäß dem aus dem Entscheidungsschritt LAST NE? ausgehenden Zweig YES.

Das beschriebene Verfahren der automatischen Korrektur der vom Netzwerkmanagementzentrum NMC gespeicherten Alarmliste nach Änderung der für das Netzwerkmanagementzentrum NMC verwendeten Filtereinstellungen stellt sicher, dass die vom Netzwerkmanagementzentrum NMC zur Netzüberwachung verwendete Alarmliste der reellen Netzsituation entspricht. Das Verfahren kann rasch und direkt nach Veränderung der relevanten Filtereinstellungen erfolgen. Es werden aufwendige und fehleranfällige manuelle Korrekturen der Alarmliste auf Seiten des Netzwerkmanagementzentrums NMC vermieden.

Während das Ausführungsbeispiel auf die Managementschnittstelle zwischen einem Betriebs- und Wartungszentrum OMC und einem Netzwerkmanagementzentrum NMC Bezug nimmt, ist die Erfindung auch auf andere Managementschnittstellen anwendbar. Für diese Managementschnittstellen können verschiedene Kommunikationsprotokolle Einsatz finden. Während die Erfindung anhand des Netzwerkmanagements eines Systems nach dem Standard UMTS erläutert wurde, ist sie auch auf andere Systeme anwendbar.

## Patentansprüche

1. Verfahren zum Betreiben eines zumindest einen Manager (NMC) und einen Agenten (OMC) umfassenden Managementsystems, bei dem
der Manager (NMC) von dem Agenten (OMC) gesendete Alarme empfängt, welche einen Filter (FILTER) mit einer ersten Filtereinstellung passiert haben,
der Manager (NMC) von dem Agenten (OMC) Informationen (notifyNewAlarm, notifyAckStateChanged, notifyCleardAlarm) empfängt zur Anpassung einer von dem Manager (NMC) gespeicherten Liste (NMC alarm list) an eine zweite Filtereinstellung, wobei die Liste (NMC alarm list) von dem Manager (NMC) empfangene Alarme enthält,
**dadurch gekennzeichnet,**
**dass** die Informationen (notifyNewAlarm, notifyAckStateChanged, notifyCleardAlarm) ausschließlich Alarme betreffen, welche von einem Wechsel von der ersten Filtereinstellung zu der zweiten Filtereinstellung betroffen sind.

2. Verfahren nach Anspruch 1, bei dem
der Manager (NMC) eine Aufforderung (Operationrequest:changeSubscriptionStatus) zum Wechsel der Filtereinstellung an den Agenten (OMC) sendet, wobei die Aufforderung (Operationrequest:changeSubscriptionStatus) die Art der Änderung der Filtereinstellung vorgibt, und wobei die Aufforderung (Operationrequest:changeSubscriptionStatus) den Agenten (OMC) zur Versendung der Informationen (notifyNewAlarm, notifyAckStateChanged, notifyCleardAlarm) auffordert.

3. Verfahren zum Betreiben eines zumindest einen Manager (NMC) und einen Agenten (OMC) umfassenden Managementsystems, bei dem
der Agent (OMC) Alarme, welche einen Filter (OMC) mit einer ersten Filtereinstellung passiert haben, an den Manager (NMC) sendet,
der Agent (OMC) dem Manager (NMC) Informationen (notifyNewAlarm, notifyAckStateChanged, notifyCleardAlarm) sendet zur Anpassung einer von dem Manager (NMC) gespeicherten Liste (NMC alarm list) an eine zweite Filtereinstellung, wobei die Liste (NMC alarm list) von dem Manager (NMC) empfangene Alarme enthält,
**dadurch gekennzeichnet,**
**dass** die Informationen (notifyNewAlarm, notifyAckStateChanged, notifyCleardAlarm) ausschließlich Alarme betreffen, welche von einem Wechsel von der ersten Filtereinstellung zu der zweiten Filtereinstellung betroffen sind.

4. Verfahren nach einem der Ansprüche 1 bis 3, bei dem
der Agent (OMC)eine Aufforderung (Operationrequest:changeSubscriptionStatus) zum Wechsel der Filtereinstellung von dem Manager (NMC) empfängt, wobei die Aufforderung (Operationrequest:changeSubscriptionStatus) die Art der Änderung der Filtereinstellung vorgibt und wobei die Aufforderung (Operationrequest:changeSubscriptionStatus) den Agenten (OMC) zur Versendung der Informationen (notifyNewAlarm, notifyAckStateChanged, notifyCleardAlarm) auffordert, und
der Agent (OMC) im Anschluss einen Wechsel von der ersten zu der zweiten Filtereinstellung vornimmt.

5. Verfahren nach einem der Ansprüche 1 bis 4, bei dem der Agent (OMC)
die Informationen (notifyNewAlarm, notifyAckStateChanged, notifyCleardAlarm) ermittelt aus einem Vergleich der ersten mit der zweiten Filtereinstellung und unter Verwendung einer von dem Agenten (OMC) gespeicherten Liste (OMC alarm list) von Alarmen, welche die Alarme der von dem Manager (NMC) gespeicherten Liste (NMC alarm list) umfassen.

6. Verfahren nach einem der Ansprüche 1 bis 5, bei dem
die Informationen (notifyNewAlarm) mindestens einen nicht in der Liste (NMC alarm list) des Managers (NMC) enthaltenen Alarm betreffen, welcher die zweite Filtereinstellung passieren würde.

7. Verfahren nach Anspruch 6, bei dem
die Informationen (notifyNewAlarm) den Manager (NMC) anweisen, den mindestens einen Alarm in die Liste (NMC alarm list) aufzunehmen.

8. Verfahren nach einem der Ansprüche 1 bis 7, bei dem
die Informationen (notifyAckStateChanged, notifyCleardAlarm) mindestens einen in der Liste (NMC alarm list) des Managers (NMC) enthaltenen Alarm betreffen, welcher die zweite Filtereinstellung nicht passieren würde.

9. Verfahren nach Anspruch 8, bei dem
die Informationen (notifyAckStateChanged, notifyCleardAlarm) den Manager (NMC) anweisen, den mindestens einen Alarm aus der Liste (NMC alarm list) zu entfernen.

10. Verfahren nach Anspruch 8, bei dem
die Informationen (notifyAckStateChanged, notifyCleardAlarm) den Manager (NMC) anweisen, einen gespeicherten Zustand des mindestens einen Alarms zu ändern, und im Anschluss, den mindestens einen Alarm aus der Liste (NMC alarm list) zu entfernen.

11. Manager (NMC) für ein zumindest den Manager (NMC) und einen Agenten (OMC) umfassendes Managementsystem, mit Mitteln zum Empfangen von von dem Agenten (OMC) gesendeten Alarmen, welche einen Filter (OMC) mit einer ersten Filtereinstellung passiert haben,
Mitteln zum Speichern einer Liste (NMC alarm list), welche von dem Manager (NMC) empfangene Alarme enthält, Mitteln zum Empfangen und Auswerten von Informationen (notifyNewAlarm, notifyAckStateChanged, notifyCleardAlarm) von dem Agenten (OMC) zur Anpassung der von dem Manager (NMC) gespeicherten Liste (NMC alarm list) an eine zweite Filtereinstellung,
**dadurch gekennzeichnet,**
**dass** die Informationen (notifyNewAlarm, notifyAckStateChanged, notifyCleardAlarm) ausschließlich Alarme betreffen, welche von einem Wechsel von der ersten Filtereinstellung zu der zweiten Filtereinstellung betroffen sind.

12. Agent (OMC) für ein zumindest einen Manager (NMC) und den Agenten (OMC) umfassendes Managementsystem, mit
Mitteln zum Senden von Alarmen, welche einen Filter (OMC) mit einer ersten Filtereinstellung passiert haben, an den Manager (NMC),
Mitteln zum Ermitteln und Versenden von Informationen (notifyNewAlarm, notifyAckStateChanged, notifyCleardAlarm) zur Anpassung einer von dem Manager (NMC) gespeicherten Liste (NMC alarm list) an eine zweite Filtereinstellung, wobei die Liste (NMC alarm list) von dem Manager (NMC) empfangene Alarme enthält,
**dadurch gekennzeichnet,**
**dass** die Informationen (notifyNewAlarm, notifyAckStateChanged, notifyCleardAlarm) ausschließlich Alarme betreffen, welche von einem Wechsel von der ersten Filtereinstellung zu der zweiten Filtereinstellung betroffen sind.
